## Europäisches Patentamt
## European Patent Office
## Office européen des brevets

(19)

(11) Numéro de publication: **0 264 307**
**B1**

---

(12) # FASCICULE DE BREVET EUROPEEN

(45) Date de publication du fascicule du brevet:
**05.12.90**

(51) Int. Cl.⁵: **B60N 2/12**

(21) Numéro de dépôt: **87401983.9**

(22) Date de dépôt: **04.09.87**

---

(54) **Glissières courbes commandées.**

---

(30) Priorité: **19.09.86 FR 8613157**

(43) Date de publication de la demande:
**20.04.88 Bulletin 88/16**

(45) Mention de la délivrance du brevet:
**05.12.90 Bulletin 90/49**

(84) Etats contractants désignés:
**AT BE CH DE ES GB GR IT LI LU NL SE**

(56) Documents cités:
**EP-A- 0 099 728**
**EP-A- 0 123 601**
**DE-A- 2 918 761**
**DE-A- 3 342 843**
**DE-A- 3 506 999**
**GB-A- 2 071 486**
**US-A- 2 133 325**
**US-A- 2 237 843**

(73) Titulaire: **A. & M. COUSIN Etablissements COUSIN FRERES, Le Bois de Flers, F-61103 Flers Cédex Orne(FR)**

(72) Inventeur: **Pipon, Yves, "La Garenne", F-61100 St-Georges-des-Groseillers(FR)**
Inventeur: **Droulon, Georges, "La Garenne", F-61100 St-Georges-des-Groseillers(FR)**

(74) Mandataire: **Coester, Jacques Charles et al, Cabinet Madeuf 3, avenue Bugeaud, F-75116 Paris(FR)**

---

ACTORUM AG

## Description

La présente invention concerne des glissières courbes formées de deux profilés courbes et parallèles. De telles glissières sont prévues notamment pour le réglage longitudinal en avant ou en arrière d'un siège de véhicule de manière que le siège permette une position assise ou une position couchée, ou toute autre position intermédiaire, de la personne installée sur le siège.

Dans l'application à un siège de véhicule, l'un des profilés est fixé au plancher du véhicule et l'autre est fixé au dessous du siège et se déplace avec lui. Le profilé fixe porte un pignon engrènant avec la denture de la crémaillère solidaire du profilé mobile. Le pignon entraîne en translation le profilé mobile par rapport au profilé fixe. Le pignon peut faire partie d'un motoréducteur à vis sans fin et roue dentée de manière à assurer une non-réversibilité de sa rotation.

Conformément à l'invention, la glissière courbe comprenant un profilé interne unique en U et un profilé externe unique en U est caractérisée par une crémaillère en Z montée sur l'un des profilés et par un pignon porté par l'autre profilé et qui est en prise avec une denture de la crémaillère présentant de préférence un rayon de courbure de 500 à 800 mm.

Dans une première forme de réalisation de l'invention, la crémaillère en forme de Z est montée sur le profilé mobile, et le pignon du moto-réducteur est solidaire du profilé fixe. Dans une seconde forme de réalisation, la crémaillère est solidaire du profilé fixe et le pignon est solidaire du profilé mobile.

Dans le cas d'une utilisation manuelle, un dispositif de blocage de l'axe du pignon permet d'arrêter sa rotation. Diverses autres caractéristiques de l'invention ressortent d'ailleurs de la description détaillée qui suit.

Des formes de réalisation de l'objet de l'invention sont représentées, à titre d'exemples non limitatifs, au dessin annexé.

La fig. 1 est une vue schématique d'ensemble de la glissière portant un siège et monté sur le plancher d'un véhicule.

La fig. 2 est une vue de face de la glissière.

La fig. 3 est une vue de dessus de la glissière.

La fig. 4 est une coupe partielle prise le long de la ligne IV-IV de la fig. 2.

La fig. 5 est une coupe analogue à la fig. 4 d'une variante.

Au dessin, la glissière courbe conforme à l'invention est représentée en son ensemble par la référence 1.

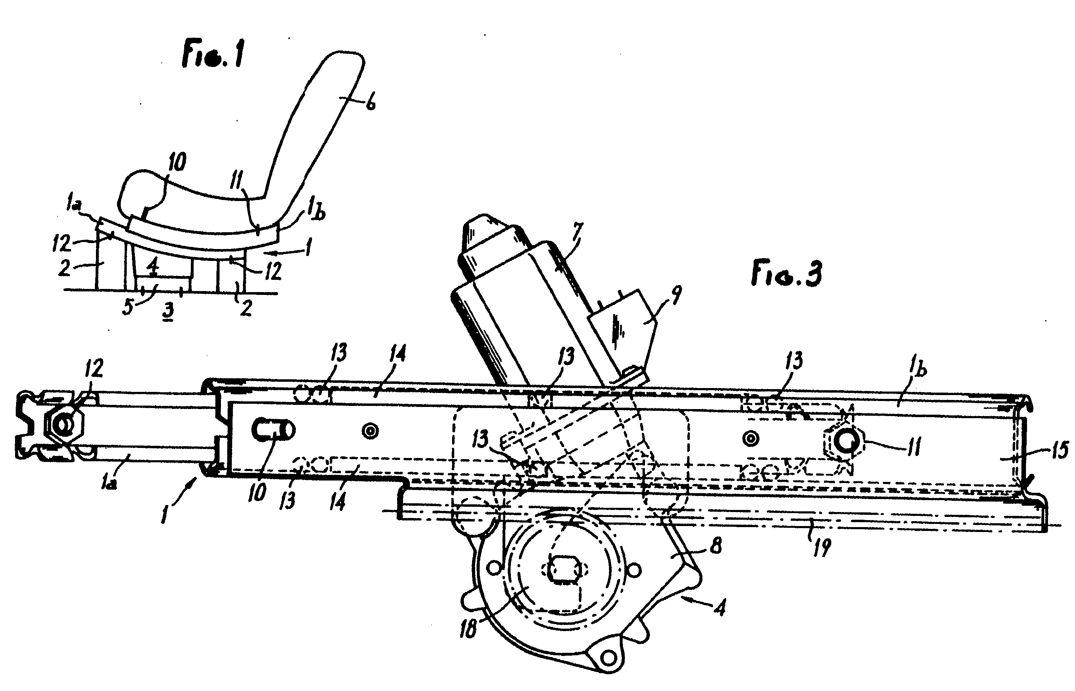

A la fig. 1, la glissière 1 qui présente un profilé fixe 1a et un profilé mobile 1b est reliée par des montants 2 au plancher 3 d'un véhicule. Le profilé fixe 1a de la glissière 1 porte un moto-réducteur 4 d'entraînement du profilé mobile 1b et dont le rôle sera mieux compris dans ce qui suit. Le moto-réducteur 4 est fixé également par son corps 5 au plancher 3 du véhicule.

Le profilé fixe 1a de la glissière 1 est ainsi bien assujetti au plancher 3 du véhicule, d'une part, par l'intermédiaire des montants 2 et, d'autre part, par l'intermédiaire du corps 5 du moto-réducteur 4.

Le profilé mobile 1b de la glissière 1 porte un siège 6, et on comprend que, par une commande du moto-réducteur 4, on peut entraîner en translation le profilé 1b qui, du fait de la courbure de la glissière 1, permet d'obtenir une position assise ou une position couchée, ou toute position intermédiaire, pour une personne installée dans le siège 6.

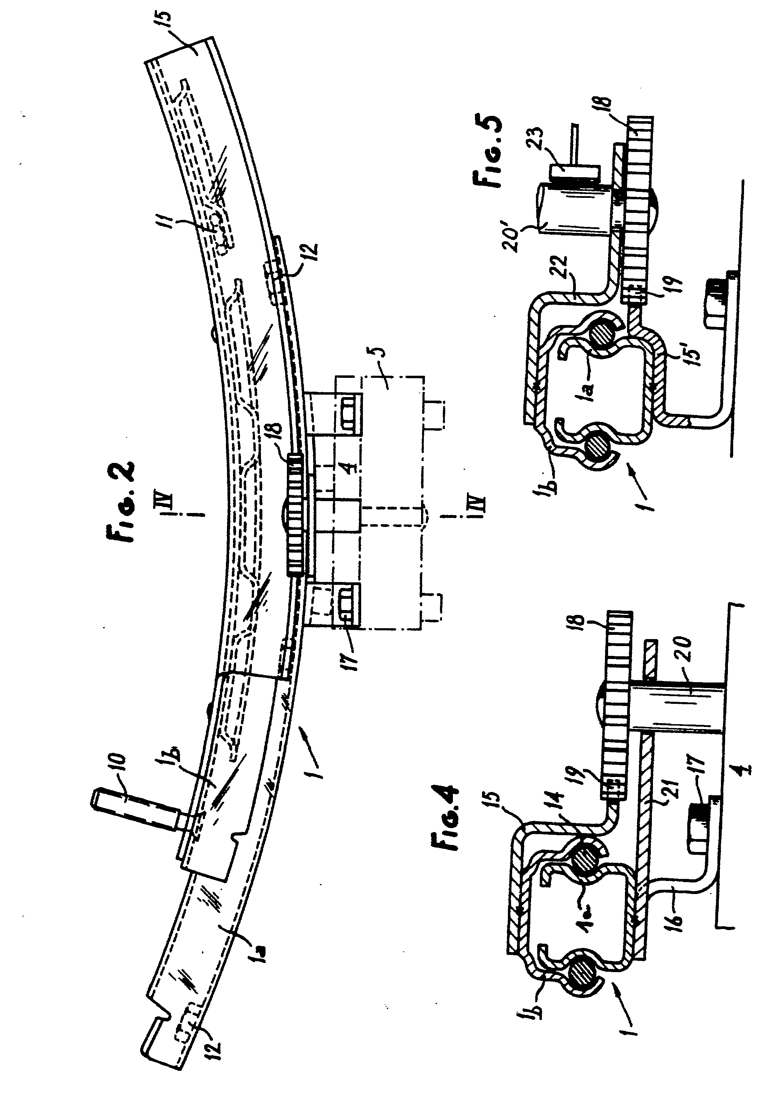

Aux fig. 2 à 4, on a représenté, de manière plus détaillée, la glissière 1 de la fig. 1 ainsi que le moto-réducteur 4 qui lui est relié. Le moto-réducteur 4 est constitué par un moto-réducteur du type généralement utilisé dans les dispositifs motorisés de levage de vitres pour les portières de véhicules automobiles et comprend une partie 7 formant moteur et une partie 8 formant réducteur. Une prise 9 permet la liaison à une alimentation de courant (non représentée).

Le profilé mobile externe 1b présente une disposition à vis 10 et écrou 11 pour la fixation du siège 6 de la fig. 1.

Le profilé fixe interne 1a comprend des écrous 12 pour la fixation aux montants 2.

Des billes 13 sont prévues entre le profilé fixe 1a et le profilé mobile 1b, et des entretoises 14 permettent d'assurer un maintien des billes 13 en position.

Conformément à l'invention, une crémaillère en forme de Z référencée 15 est fixée, par exemple soudée, au profilé mobile 1b et le moto-réducteur 4, qui est fixé au profilé fixe 1a par l'intermédiaire d'une patte 16 et d'écrous 17, présente son pignon 18 en prise avec la denture 19 de la crémaillère 15. La référence 20 indique le plot d'entraînement du pignon 18 du moto-réducteur 4 et il est maintenu par une platine 21 fixée au profilé fixe 1a. Le moto-réducteur 4 est prévu à vis sans fin et roue dentée de manière à assurer un caractère non réversible de la rotation du pignon 18.

On voit ainsi que selon le sens de rotation du pignon 18, c'est-à-dire selon la polarité de la tension appliquée sur la prise 9 du moto-réducteur 4, le profilé mobile 1b se déplace, dans un sens ou dans l'autre par rapport au profilé fixe 1a par engagement de la denture 19 de la crémaillère 15 portée par le profilé mobile 1b avec le pignon 18 du moto-réducteur 4 solidaire du profilé fixe 1a.

A la fig. 5 qui représente une variante de réalisation, c'est le profilé fixe 1a qui porte une crémaillère 15' analogue à la crémaillère 15 des figures précédentes. La référence 20' indique le plot d'entraînement du pignon d'un moto-réducteur analogue au moto-réducteur 4 mais qui est solidaire du profilé 1b est se déplace avec lui, une patte 22 étant fixée au profilé mobile 1b pour le maintien du plot 20' et du moto-réducteur 4.

Ainsi, comme on l'a vu plus haut en relation avec la fig. 1, et du fait de la forme courbe de la glissière 1 (rayon de courbure par exemple compris entre 500 et 800 mm), un siège 6 fixé au profilé mobile 1b peut, au cours du déplacement en translation du profilé, occuper une succession de positions entre une position assise et une position couchée pour la personne installée dans le siège. Bien que cela n'ait pas été représenté, il est évident que dans la variante de la fig. 5, le moto-réducteur 4 n'est par fixé par son corps 5 au plancher 3 du véhicule, comme dans l'application préférée de la réalisation des fig. 2 à 4, mais sous l'assise du siège et sur la patte 22.

On peut en outre prévoir, associé au moto-réducteur 4, un dispositif connu permettant la mémorisation de la position de la glissière ainsi donnée par le moto-réducteur.

De même, et comme on l'a représenté de manière schématique à la fig. 5, un dispositif de freinage représenté en 23 peut permettre l'arrêt de la rotation du pignon dans le cas d'une utilisation manuelle pour le basculement du siège. Dans un tel cas, il n'y a évidemment pas de moto-réducteur et le plot 20' du pignon 18 est directement monté à rotation sur la patte 22.

## Revendications

1. Glissière courbe comprenant un profilé interne unique en U (1a) et un profilé externe unique en U (1b), caractérisée par une crémaillère en Z (15, 15') montée sur l'un des profilés et par un pignon (18) porté par l'autre profilé et qui est en prise avec une denture (19) de la crémaillère présentant de préférence un rayon de courbure de 500 à 800 mm.

2. Glissière courbe selon la revendication 1, caractérisée en ce que la crémaillère (19) est montée sur le profilé externe (1b) et en ce que le pignon (18) fait partie d'un moto-réducteur (4, 20) fixé à une partie fixe (21) de la glissière.

3. Glissière courbe selon la revendication 1, caractérisée en ce que la crémaillère (19) est montée sur le profilé interne (1a) et en ce que le pignon (18) fait partie d'un moto-réducteur (4, 20') fixé à une partie mobile (22, 1b) de la glissière.

4. Glissière courbe selon l'une des revendications 1 à 3, caractérisée en ce que le moto-réducteur (4) comporte une vis sans fin et une roue dentée rendant nonréversible la rotation du pignon (18).

5. Glissière courbe selon l'une des revendications 1 à 4, caractérisée par un dispositif permettant une mémorisation de la position de la glissière.

6. Glissière courbe selon la revendication 1, caractérisée en ce qu'un dispositif de blocage de l'axe du pignon (18) est prévu afin d'arrêter la rotation de ce pignon en cas d'une utilisation manuelle.

## Patentansprüche

1. Bogenförmige Führung mit einem einzelnen inneren U-Profil (1a) und einem einzelnen äußeren U-Profil (1b), gekennzeichnet durch eine auf einem der Profile angeordnete Z-förmige Zahnstange (15, 15') und ein Zahnritzel (18), das vom anderen Profil getragen ist und mit einer Verzahnung (19) der Zahnstange kämmt, die vorzugsweise einen Krümmungsradius von 500 bis 800 mm hat.

2. Bogenförmige Führung nach Anspruch 1, dadurch gekennzeichnet, daß die Zahnstange (19) auf dem äußeren Profil (1b) angeordnet ist, und daß das Zahnritzel (18) Teil eines auf einem feststehenden Abschnitt (21) der Führung angeordneten Getriebemotors (4, 20) ist.

3. Bogenförmige Führung nach Anspruch 1, dadurch gekennzeichnet, daß die Zahnstange (19) auf dem inneren Profil (1a) angeordnet ist, und daß das Zahnritzel (18) Teil eines auf einem beweglichen Abschnitt (22, 1b) der Führung angeordneten Getriebemotors (4, 20') ist.

4. Bogenförmige Führung nach einem der Ansprüche 1 bis 3, dadurch gekennzeichnet, daß der Getriebemotor (4) eine Schnecke und ein Zahnrad aufweist, welche die Drehung des Zahnritzels (18) selbsthemmend machen.

5. Bogenförmige Führung nach einem der Ansprüche 1 bis 4, gekennzeichnet durch eine Vorrichtung, die eine Speicherung der Führungsstellung ermöglicht.

6. Bogenförmige Führung nach Anspruch 1, dadurch gekennzeichnet, daß eine Blockiervorrichtung für die Achse des Zahnritzels (18) vorgesehen ist, um die Drehung dieses Zahnritzels bei manueller Betätigung zu stoppen.

## Claims

1. Curved slide member comprising a single U-shaped inner section (1a) and a single U-shaped outer section (1b), characterized by a Z-shaped rack (15, 15') mounted on one of the sections and by a pinion (18) carried by the other section and meshing with a toothing (19) of the rack having preferably a radius of curvature from 500 to 800 mm.

2. Curved slide member according to claim 1, characterized in that the rack (19) is mounted on the outer section (1b), and in that the pinion (18) is part of a reduction gear unit (4, 20) attached to a fixed portion (21) of the slide member.

3. Curved slide member according to claim 1, characterized in that the rack (19) is mounted on the inner section (1a) and in that the pinion (18) is part of a reduction gear unit (4, 20') attached to a mobile portion (22, 1b) of the slide member.

4. Curved slide member according to one of claims 1 to 3, characterized in that the reduction gear unit (4) comprises an endless screw and a toothed wheel making rotation of the pinion (18) non reversible.

5. Curved slide member according to one of claims 1 to 4, characterized by a device for storing in a memory the position of the slide member.

6. Curved member according to claim 1, characterized in that a locking device of the spindle of the pinion (18) is provided so as to stop the rotation of this pinion in case of a manual use.

Fig.1

Fig.3

EP 0 264 307 B1

Fig. 2

10

1b

IV

11

15

12

18

1a

12

1

17

4

5

IV

Fig. 4

15

1b

14

1a

19

18

1

16

21

17

20

4

Fig. 5

20'

23

1b

22

1a

18

1

15'

19

EP 0 264 307 B1